# EUROPEAN PATENT APPLICATION

(11) **EP 4 541 870 A1**
(43) Date of publication of application: **23.04.2025**
(21) Application number: 24803682.4
(22) Date of filing: 08.05.2024
(51) Int. Cl.: C10G 1/10, C10G 1/00

(54) **METHOD OF PREPARING PYROLYSIS FUEL OIL FROM WASTE PLASTICS**

(30) Priority: 11.05.2023 KR 20230061371
(71) Applicant: LG Chem, Ltd., Yeongdeungpo-gu Seoul 07336 (KR)
(72) Inventor: JEONG, Jun Kyo, Daejeon 34122 (KR); LEE, Sang Beom, Daejeon 34122 (KR); LEE, Sung Ho, Daejeon 34122 (KR)
(74) Representative: Goddar, Heinz J.
(86) International application number: PCT/KR2024/006119
(87) International publication number: WO 2024/232629

(57) **Abstract**

The present invention provides a method of preparing pyrolysis oil from waste plastics, the method including: (S1) subjecting a waste plastic raw material to pyrolysis; (S2) condensing a gaseous stream produced by the pyrolysis to obtain liquid oil; and (S3) refining the liquid oil, wherein the pyrolysis is performed under a temperature rise condition in the range of 430 to 450°C.

## Description

### [Technical Field]

### CROSS-REFERENCE TO RELATED APPLICATION

The present application claims the benefit of priority to Korean Patent Application No. 10-2023-0061371, filed on May 11, 2023, the entire contents of which are incorporated herein by reference.

### Technical Field

The present invention relates to the pyrolysis of waste plastics to fuel oil, and more particularly to a method of preparing light hydrocarbon oil with a high yield by improving pyrolysis efficiency of waste plastics.

### [Background Art]

Recently, the development and use of plastics having physical properties required for various applications and purposes have increased. Plastics require a lot of energy from crude oil extraction to preparation, and a large amount of carbon is emitted in the process. Furthermore, even when plastics used in various products are discarded, environmental pollution and enormous disposal costs occur, and thus, recycling of waste plastics has become an important social issue.

In general, a method of recycling waste plastics (resins) includes mechanical recycling, chemical recycling, and thermal recycling. The mechanical recycling is a method of crushing and selecting collected waste plastics, separating the waste plastics by type, melting the waste plastics using an extruder, and mixing the waste plastics with a new material at a certain ratio or adding a functional additive when pelletizing the waste plastics to produce a resin product. The chemical recycling is a method of extracting only a specific polymer using various chemical means, or recovering and repolymerizing pure single molecules. The thermal recycling is a method of burning waste plastics and recovering the waste plastics as heat energy.

In particular, the chemical recycling may reduce greenhouse gases compared to incineration of waste plastics and has recently received attention in terms of alternative fuel development.

For example, when a waste plastic such as a polyethylene or polypropylene material is heated and pyrolyzed at a certain temperature, a gaseous stream containing a mixture of non-condensable gas and liquid oil is produced, and highly viscous residual wax that is not completely decomposed remains. In accordance with an increase in the importance of liquid oil among the pyrolysis products as fuel oil for producing a petrochemical product, studies to increase the yield of the liquid oil have been actively conducted.

The liquid oil produced by the pyrolysis of waste plastics, that is, pyrolysis oil, is usually mixed oil containing C₅₋₁₂ light hydrocarbon oil such as naphtha and longer-chain hydrocarbon oil. When a large amount of high-boiling point (heavy) components are included in such mixed oil, the yield of high-value-added light hydrocarbon oil is limited, and the amount of residual wax discharged is excessive.

In order to solve these problems, a method of performing a contact decomposition reaction by catalytic cracking during pyrolysis of waste plastics, a method of condensing heavy hydrocarbon (that is, long-chain hydrocarbon) components in a pyrolysis product of waste plastics using a contactor and then circulating the components to a pyrolysis reactor so that the components are subjected to the pyrolysis process again, and the like have been proposed. However, these methods are limited in improving pyrolysis efficiency of waste plastics, and therefore are only used for recycling of mixed oil.

Therefore, there is a need to develop a technique capable of improving the pyrolysis process of waste plastics and improving the yield of high-quality light hydrocarbon oil.

### [Disclosure]

### [Technical Problem]

In order to solve the problems mentioned in the background art, an object of the present invention relates to a method of preparing light hydrocarbon oil with a high yield by improving pyrolysis efficiency of waste plastics by performing pyrolysis of waste plastics under a temperature rise condition in a predetermined temperature range rather than at a single temperature.

### [Technical Solution]

In one general aspect, a method of preparing pyrolysis oil from waste plastics includes: (S1) subjecting a waste plastic raw material to pyrolysis; (S2) condensing a gaseous stream produced by the pyrolysis to obtain liquid oil; and (S3) refining the liquid oil, wherein the pyrolysis is performed under a temperature rise condition in the range of 430 to 450°C.

### [Advantageous Effects]

According to the present invention, as the pyrolysis of waste plastics is performed under the temperature rise condition in the range of 430 to 450°C, the decomposition efficiency of the waste plastics is improved, such that the yield of high-quality light hydrocarbon oil may be increased, and the discharge of underutilized residual wax may be minimized.

Furthermore, the use of the light hydrocarbon fuel oil obtained by the pyrolysis of waste plastics may reduce greenhouse gas emissions caused when supplying a raw material to a petrochemical process, may improve process efficiency such as energy consumption saving, and may be environmentally advantageous as no harmful gases are produced when processing waste plastics.

### [Best Mode]

The terms and words used in the description and claims of the present invention are not to be construed limitedly as having general or dictionary meanings but are to be construed as having meanings and concepts meeting the technical ideas of the present invention, based on a principle that the inventors are able to appropriately define the concepts of terms in order to describe their own inventions in the best mode.

The meaning "including" or "containing" used in the present application specifies a specific property, region, integer, step, operation, element, and/or component, and does not exclude addition of another specific property, region, integer, step, operation, element, and/or component.

The term "stream" used in the present application may refer to a flow of a fluid in a process, and may also refer to a fluid flowing through a pipe itself. Specifically, the stream may refer to both a fluid flowing through a pipe connecting respective devices to each other itself and a flow of a fluid. In addition, the fluid may include any one or more components of gas, liquid, and solid.

The term "Cₙ" used in the present application refers to all hydrocarbons having n carbon atoms, and for example, "C₅₋₁₂" refers to all hydrocarbon molecules having 5 to 12 carbon atoms.

The term "liquid oil" used in the present application refers to a product obtained by converting a gaseous stream obtained in a pyrolysis step into a liquid state by condensation, and may also be referred to as "liquid distilled oil".

In addition, the "pressure" referred to in the present application refers to an absolute pressure measured based on a complete vacuum.

A method of preparing pyrolysis oil from waste plastics according to an embodiment of the present invention includes (S1) subjecting a waste plastic raw material to pyrolysis, (S2) obtaining liquid oil by condensation, and (S3) refining the liquid oil.

Hereinafter, the method of preparing pyrolysis oil from waste plastics according to the present invention will be described in detail for each step.

In the present invention, a waste plastic raw material is subjected to pyrolysis under a temperature rise condition in the range of 430 to 450°C (S1).

The waste plastic may include a natural polymer, a synthetic polymer, or a mixture thereof, and the synthetic polymer may include thermoplastic resins such as polyethylene, polypropylene, and polystyrene. In addition, the thermoplastic resin may be a mixture of other types of resins such as PVC and PET, a thermosetting resin, and the like.

The waste plastics such as these materials may be subjected to, after collecting and selecting, a pretreatment process including crushing, washing, drying, and melting. The pretreatment process may be performed by a general method in the art.

For example, a size of crushed waste plastic is not particularly limited, but the waste plastics may be crushed to a size range of 0.5 to 6.0 cm, and then, the washed and dried waste plastic crushed material may be put into a tubular melter such as an extruder and then melted. The extruder has an extrusion function by melting and kneading, and may be, for example, a twin-screw extruder. When the waste plastic is a thermoplastic resin such as polyethylene, polypropylene, or a mixture thereof, a melting temperature may be 120 to 350°C or 150 to 250°C, but is not limited thereto.

The waste plastic melt obtained by the pretreatment process is supplied to the pyrolysis reactor as a raw material. The pyrolysis reactor that may be used in the present invention may be a stirred tank reactor equipped with an agitator, the agitator is not particularly limited as long as it may sufficiently agitate the waste plastic melt supplied as a raw material, and may be, for example, a helical ribbon type or an anchor type, and it is advantageous to maintain a gap of about 5 mm to 1 cm from an inner wall of the reactor to maximize agitation of the waste plastics and heat transfer through the wall of the reactor. In addition, the reactor may be operated in either a batch type or continuous type. In addition, the reactor may be purged with nitrogen to maintain an oxygen-free or low-oxygen atmosphere while performing a pyrolysis reaction of the waste plastic melt.

The waste plastic melt is supplied to the stirred reactor and heated while operating the agitator to perform pyrolysis of the waste plastic melt. The heating of the waste plastics may be performed by transferring high-temperature heat to the waste plastics by passing high-temperature/high-pressure steam, hot water, heat transfer fluid, or the like through a jacket provided on the outside of the reactor, but is not particularly limited thereto.

In general, when waste plastics are subjected to pyrolysis, C₁₋₄ gas components, C₅₋₁₂ light hydrocarbons such as naphtha, and longer-chain hydrocarbon components are vaporized and discharged through the top of the reactor, and highly viscous residual wax is not vaporized and remains at the bottom of the reactor. When the amount of high-boiling point components is large in the vaporized top discharge, the yield of high-value-added light hydrocarbon oil is limited, and the highly viscous residual wax is underutilized and it becomes an obstacle to the process operation or causes a decrease in quality of the final product.

Accordingly, the present invention is to increase the selectivity for conversion into light hydrocarbons during the pyrolysis of waste plastics, by transferring heat to the waste plastic raw material at a constant rate of, for example, 5 to 20 °C/min or 10 to 15 °C/min to heat the waste plastic raw material to 430°C, and maintaining a stepwise temperature rise condition from 430°C to 450°C.

In the temperature rise pyrolysis, as the reaction temperature is gradually raised in a specific temperature range in which the decomposition reaction of waste plastics is actively performed, the pyrolysis reaction efficiency is improved compared to pyrolysis at a single temperature, such that the selectivity for conversion into light hydrocarbons may be increased. As a result, the amount of residual wax may be minimized while increasing the yield of light hydrocarbon oil with respect to the amount of the waste plastic raw material supplied.

Meanwhile, the raw material of the waste plastic is mainly a thermoplastic resin, and for example, considering that the raw material of the waste plastic may be a mixture containing polyethylene having a number average molecular weight of 10,000 to 500,000, and specifically, 100,000 to 300,000, or polypropylene having a number average molecular weight of 5,000 to 300,000, and specifically, 10,000 to 200,000, the pyrolysis reaction is advantageously performed in the range of 430 to 450°C. When the pyrolysis temperature is lower than 430°C, a pyrolysis rate may slow down and conversion into light hydrocarbons may be decreased, and when the pyrolysis temperature is higher than 450°C, production of solid carbides such as char may be increased due to an excessive reaction due to high heat.

The pyrolysis under the temperature rise condition may include pyrolysis performed by multi-stage temperature rise or linear temperature rise.

In the pyrolysis performed by multi-stage temperature rise, the pyrolysis in each stage may be performed under an isothermal or temperature rise condition, and a pyrolysis temperature at a subsequent stage may be higher than a pyrolysis temperature at a previous stage. For example, when a three-stage temperature rise is applied, pyrolysis gas produced by heating a waste plastic raw material to 430°C and then performing primary pyrolysis while maintaining the isotherm at 430°C for a certain period of time may be discharged through the top of the reactor, pyrolysis gas produced by heating the residue in the primary pyrolysis to 440°C and then performing secondary pyrolysis while maintaining the isotherm at 440°C for a certain period of time may be discharged through the top of the reactor again, and then pyrolysis gas produced by heating the residue in the secondary pyrolysis to 450°C and then performing tertiary pyrolysis while maintaining the isotherm at 450°C for a certain period of time may be discharged through the top of the reactor. Alternatively, pyrolysis may be performed while heating the waste plastic raw material to 430°C and then gradually raising the temperature from 430°C to 440°C for a certain period of time, the temperature may be gradually raised from 440°C to 450°C for a certain period of time, and then finally, pyrolysis may be additionally performed at 450°C for a certain period of time.

Meanwhile, the pyrolysis performed by linear temperature rise may be performed at a heating rate of 0.1 to 0.2 °C/min in the range of 430 to 450°C.

In an embodiment of the present invention, the pyrolysis under the temperature rise condition may be performed at a pressure of 0.9 to 1.1 bar for 1 to 3 hours. The pyrolysis reaction time may be determined by considering the time when a production rate of light hydrocarbons having 12 or fewer carbon atoms increases in each temperature section of 430 to 450°C after the start of the pyrolysis reaction of waste plastics.

In addition, the pyrolysis under the temperature rise condition according to the present invention may be performed in the same reactor or in a plurality of reactors connected in series. For example, in one pyrolysis reactor, components vaporized by the initial pyrolysis reaction may be discharged through the top, and then subsequent pyrolysis may be sequentially performed on the remaining residue, or subsequent pyrolysis may be continuously performed by transferring the residue to another pyrolysis reactor connected in series at the bottom of the pyrolysis reactor.

The pyrolysis gas produced by stepwise vaporization in the temperature range of 430 to 450°C through the pyrolysis under the temperature rise condition may be discharged through the top of the reactor. The gaseous stream discharged through the top of the reactor may contain C₁₋₄ hydrocarbons, C₅₋₁₂ hydrocarbons, C₁₃₋₂₂ hydrocarbons, and C₂₃₋₄₀ hydrocarbons.

Subsequently, the gaseous stream produced by the pyrolysis is condensed to obtain liquid oil (S2).

The condensation is a process of cooling the pyrolysis gas, and through this, a polymerization reaction of hydrocarbons in the high-temperature pyrolysis gas discharged from the pyrolysis reactor may be suppressed and a heat load of a subsequent process (refining process) may be reduced. For example, when the gaseous stream discharged through the top of the pyrolysis reactor is supplied to a condenser and heat exchange is performed with quench oil or quench water, the gaseous stream may be cooled and condensed and liquid oil may thus be obtained, and the liquid oil may be discharged through the bottom of the condenser and transferred to a storage tank. Meanwhile, the gas components (for example, C₁₋₄ hydrocarbons) that are not condensed in the heat exchange may be discharged through the top, and may be used as a heat source in the petrochemical process through a subsequent process such as compression.

If necessary, an operating temperature of the condenser may be changed in the range of 430 to 450°C by considering the temperature of the pyrolysis product discharged in each temperature section during the pyrolysis under the temperature rise condition. For example, when the pyrolysis under the temperature rise condition is performed in three reactors, the operating temperature of the condenser may be adjusted differently by setting the temperature according to a liquid level of the reactor to which the condenser is connected.

An amount of the liquid oil obtained through the condensation is in the range of 80 to 90 wt% based on the weight of the waste plastic raw material, which means that residual wax that is not decomposed due to a high viscosity is discharged in a small amount of 20 wt% or less.

Specifically, the liquid oil may contain C₅₋₁₂ light oil (LO), C₁₃₋₂₂ middle oil (MO), and C₂₃₋₄₀ heavy oil (HO).

Among them, an amount of the C₅₋₁₂ light oil (LO) that may be used as high-value-added fuel oil may be 40 to 60 wt% based on the total weight of the liquid oil. In addition, the amount of the C₅₋₁₂ light oil (LO) may be 35 to 50 wt% based on the weight of the waste plastic raw material before the pyrolysis.

That is, in the present invention, as the waste plastics are subjected to pyrolysis under the temperature rise condition in the range of 430 to 450°C, the decomposition efficiency of the waste plastics is improved, such that C₅₋₁₂ light oil (LO) may be obtained with a high yield.

Thereafter, the liquid oil is refined to separate components (S3).

Since the liquid oil obtained through the temperature rise pyrolysis and condensation is mixed oil containing light hydrocarbons and longer-chain hydrocarbons, the liquid oil is supplied to a multi-stage distillation column and subjected to a refining process in which stepwise separation is performed by a boiling point.

The refining process may be performed in a general manner in the art, and is not particularly limited. For example, a feed stream supplied to the distillation column may contain all light and heavy oil components obtained by the pyrolysis of waste plastics, a stream containing low-boiling point light hydrocarbons may be discharged through the top of the distillation column, and a stream containing high-boiling point heavy hydrocarbons may be discharged through the bottom of the distillation column.

Meanwhile, when the temperature rise pyrolysis according to the present invention is performed in a plurality of pyrolysis reactors connected in series, a pipe connecting each reactor and the distillation column may be connected at different locations to optimize column operating heat.

The feed stream supplied to the distillation column may be mixed oil containing oil components obtained by the pyrolysis of waste plastics, that is, C₅₋₁₂ light oil (LO), C₁₃₋₂₂ middle oil (MO), and C₂₃₋₄₀ heavy oil (HO), and a stream containing C₅₋₁₂ light components may be separated and discharged through the top of the distillation column.

In an embodiment of the present invention, the C₅₋₁₂ light hydrocarbons separated through the top of the distillation column may be an amount of 40 to 60 wt% based on the total weight of the feed stream, that is, the liquid oil (mixed oil), and it may be an amount of 35 to 50 wt% based on the weight of the waste plastic raw material. The C₅₋₁₂ light hydrocarbons obtained with a high yield may be condensed and then efficiently used as high-quality fuel oil.

In particular, the C₅₋₁₂ light hydrocarbon fuel oil finally obtained in the present invention has a boiling point of 0 to 230°C, and specifically, 30 to 216°C, a kinematic viscosity at 40°C of 0.3 to 1.0 cSt, and specifically, 0.4 to 0.9 cSt, and a flash point of -80°C or higher (for example, -40°C), and may thus be efficiently used as a petrochemical raw material.

As described above, according to the present invention, as the pyrolysis of waste plastics is performed under the temperature rise condition in the range of 430 to 450°C, the decomposition efficiency of the waste plastics is improved, such that the yield of high-quality light hydrocarbon oil may be increased, and the discharge of underutilized residual wax may be minimized.

Furthermore, the use of the light hydrocarbon oil obtained from the pyrolysis of waste plastics may reduce greenhouse gas emissions caused when supplying a raw material to a petrochemical process, may improve process efficiency such as energy consumption saving, and may be environmentally advantageous as no harmful gases are produced when processing waste plastics.

Hereinafter, the present invention will be described in more detail with reference to Examples. However, the following Examples are provided for illustrating the present invention. It is apparent to those skilled in the art that various modifications and alterations may be made without departing from the scope and spirit of the present invention, and the scope of the present invention is not limited thereto.

### Example 1:

100 parts by weight of a waste plastic melt containing polyethylene (PE) and polypropylene (PP) at a weight ratio of 6:4 was prepared, and pyrolysis was performed under a three-stage temperature rise condition using three stirred reactors connected in series.

Specifically, the waste plastic melt was supplied to a first reactor and heated to 430°C under atmospheric pressure (1 bar), primary pyrolysis was performed while maintaining the isotherm at 430°C for 40 minutes, and the produced pyrolysis gas was discharged through the top of the first reactor. The stream discharged through the top of the first reactor was introduced into a condenser connected to the reactor and then cooled to 25°C to obtain condensed liquid distilled oil, and non-condensed gas components were discharged.

A residue in the primary pyrolysis remaining at the bottom of the first reactor was supplied to a second reactor connected in series to the first reactor and heated to 440°C at atmospheric pressure (1 bar), secondary pyrolysis was performed while maintaining the isotherm at 440°C for 40 minutes, and the produced gas was discharged through the top of the second reactor. The stream discharged through the top of the second reactor was introduced into a condenser connected to the reactor and then cooled to 25°C to obtain condensed liquid oil, and non-condensed gas components were discharged.

A residue in the secondary pyrolysis remaining at the bottom of the second reactor was supplied to a third reactor connected in series to the second reactor and heated to 450°C at atmospheric pressure (1 bar), tertiary pyrolysis was performed while maintaining the isotherm at 440°C for 40 minutes, and the produced gas was discharged through the top of the third reactor. The stream discharged through the top of the third reactor was introduced into a condenser connected to the reactor and then cooled to 25°C to obtain condensed liquid oil, and non-condensed gas components were discharged.

The liquid oil obtained by passing through each of the first to third reactors and condensers connected to each of them was supplied to a distillation column and purified by separation according to a boiling point, thereby finally preparing C₅₋₁₂ light hydrocarbon fuel oil.

### Example 2:

The same process as in Example 1 was performed except that the pyrolysis of the waste plastic melt was performed under a three-stage temperature rise condition of 430°C for 30 minutes, 440°C for 60 minutes, and 450°C for 30 minutes.

### Example 3:

The same process as in Example 1 was performed except that the pyrolysis of the waste plastic melt was performed under a linear temperature rise condition in which the temperature was gradually raised from 430°C to 450°C for 120 minutes.

### Comparative Example 1:

100 parts by weight of a waste plastic melt containing polyethylene (PE) and polypropylene (PP) at a weight ratio of 6:4 was supplied to one pyrolysis reactor and heated to 430°C, and then pyrolysis was performed while maintaining the temperature at 430°C for 180 minutes.

A stream discharged through the top of the reactor was introduced into a condenser connected to the reactor and then cooled to 25°C to obtain condensed liquid oil, and non-condensed gas components were discharged.

The liquid oil was supplied to a distillation column and refined by separation according to a boiling point, thereby finally preparing C₅₋₁₂ light hydrocarbon fuel oil.

### Comparative Example 2:

The same process as in Comparative Example 1 was performed except that the waste plastic melt was heated to 440°C and then subjected to the pyrolysis while maintaining the temperature at 440°C for 120 minutes.

### Comparative Example 3:

The same process as in Comparative Example 1 was performed except that the waste plastic melt was heated to 450°C and then subjected to the pyrolysis while maintaining the temperature at 450°C for 120 minutes.

### Comparative Example 4:

The same process as in Example 1 was performed except that the pyrolysis of the waste plastic melt was performed under a three-stage temperature rise condition of 410°C for 40 minutes, 420°C for 40 minutes, and 430°C for 40 minutes.

### Comparative Example 5:

The same process as in Example 1 was performed except that the pyrolysis of the waste plastic melt was performed under a three-stage temperature rise condition of 420°C for 40 minutes, 430°C for 40 minutes, and 440°C for 40 minutes.

### Comparative Example 6:

The same process as in Example 1 was performed except that the pyrolysis of the waste plastic melt was performed under a three-stage temperature rise condition of 440°C for 40 minutes, 450°C for 40 minutes, and 460°C for 40 minutes.

### Comparative Example 7:

The same process as in Example 1 was performed except that the pyrolysis of the waste plastic melt was performed under a three-stage temperature rise condition of 450°C for 40 minutes, 460°C for 40 minutes, and 470°C for 40 minutes.

The compositions of the liquid oil obtained through condensation after pyrolysis of the waste plastics in each of Examples and Comparative Examples were analyzed by GC-MS, and the fractions of non-condensable C₁₋₄ gas, condensed liquid oil (C₅₋₁₂ light oil (LO)), C₁₃₋₂₂ middle oil (MO) , C₂₃₋₄₀ heavy oil (HO), and residue were calculated using a peak area for each region according to the number of carbon atoms in a mass spectrometry spectrum.

Table 1 shows the fraction of LO (C₅₋₁₂) in liquid oil and the yield of LO (C₅₋₁₂) based on the amount of waste plastic raw material supplied according to pyrolysis conditions.

**[Table 1]**

| | Pyrolysis conditions | Yield (%) of liquid gas oil (based on the amount of raw material supplied) | Fraction (%) of C₅₋₁₂ in liquid gas oil | Yield (%) of C₅₋₁₂ based on amount of raw material supplied |
|---|---|---|---|---|
| Example 1 | 430°C/440°C/450°C (40 minutes/40 minutes/40 minutes) | 85.6 | 44.0 | 37.6 |
| Example 2 | 430°C/440°C/450°C (30 minutes/60 minutes/40 minutes) | 84.8 | 44.8 | 38.0 |
| Example 3 | 430°C to 450°C (1°C/6 minutes, 120 minutes) | 84.3 | 43.9 | 37.0 |
| Comparative Example 1 | Single temperature at 430°C (120 minutes) | 91.4 | 32.8 | 29.9 |
| Comparative Example 2 | Single temperature at 440°C (120 minutes) | 85.2 | 41.0 | 34.9 |
| Comparative Example 3 | Single temperature at 450 C (120 minutes) | 71.7 | 48.7 | 34.9 |
| Comparative Example 4 | 410°C/420°C/430°C (40 minutes/40 minutes/40 minutes) | Not measurable | | |
| Comparative Example 5 | 420°C/430°C/440°C (40 minutes/40 minutes/40 minutes) | 90.8 | 35.4 | 32.1 |
| Comparative Example 6 | 440°C/450°C/460°C (40 minutes/40 minutes/40 minutes) | 70.1 | 49.5 | 33. 6 |
| Comparative Example 7 | 450°C/460°C/470°C (40 minutes/40 minutes/40 minutes) | 61.5 | 50.4 | 31.0 |

In Table 1, it could be confirmed that, in Examples 1 to 3 in which the pyrolysis of waste plastics was performed under a temperature rise condition in the range of 430 to 450°C, the yield of C₅₋₁₂ light oil (LO) was improved compared to Comparative Examples.

Specifically, in Comparative Examples 1 to 3 that the pyrolysis was performed at a single temperature, the yield distribution of light hydrocarbons was unstable. In particular, in Comparative Example 3 that the pyrolysis was performed at 450°C, the decomposition rate was increased, but the production of solid carbides such as char was increased. As a result, the yield of liquid oil was decreased based on the amount of raw material supplied.

Meanwhile, in Comparative Example 4 that the pyrolysis was performed under a temperature rise condition, but as both the start and end temperatures of the pyrolysis were lowered, the pyrolysis rate was decreased. As a result, a little raw material remained in the form of highly viscous wax, and the yield of liquid oil was not measured.

In Comparative Examples 5 to 7 that the temperature rise condition was out of the range of 430 to 450°C, the yield of C₅₋₁₂ light oil (LO) was decreased. In particular, in Comparative Examples 6 and 7, as the start and end temperatures of the pyrolysis were increased, the yield of liquid oil based on the supply amount was decreased, and the amount of residue discharged was increased.

## Claims

1. A method of preparing pyrolysis oil from waste plastics, the method comprising:
(S1) subjecting a waste plastic raw material to pyrolysis;
(S2) condensing a gaseous stream produced by the pyrolysis to obtain liquid oil; and
(S3) refining the liquid oil,
wherein the pyrolysis is performed under a temperature rise condition in the range of 430 to 450°C.

2. The method of claim 1, wherein the pyrolysis is performed in the same reactor or in a plurality of reactors connected in series.

3. The method of claim 1, wherein the pyrolysis includes pyrolysis by multi-stage temperature rise or linear temperature rise.

4. The method of claim 1, wherein the pyrolysis is performed by multi-stage temperature rise in which each stage is maintained under an isothermal or temperature rise condition, and a pyrolysis temperature at a subsequent stage is higher than a pyrolysis temperature at a previous stage.

5. The method of claim 1, wherein the pyrolysis is performed by the linear temperature rise at a heating rate of 0.1 to 0.2 °C/min in the range of 430 to 450°C.

6. The method of claim 1, wherein the pyrolysis is performed for 1 to 3 hours.

7. The method of claim 1, wherein the liquid oil is obtained in an amount of 80 to 90 wt% based on the weight of the waste plastic raw material.

8. The method of claim 1, wherein the liquid oil is mixed oil containing C₅₋₁₂ light oil (LO), C₁₃₋₂₂ middle oil (MO), and C₂₃₋₄₀ heavy oil (HO).

9. The method of claim 8, wherein the C₅₋₁₂ light oil (LO) is contained in an amount of 40 to 60 wt% based on the total weight of the liquid oil.

10. The method of claim 8, wherein the C₅₋₁₂ light oil (LO) is obtained in an amount of 35 to 50 wt% based on the weight of the waste plastic raw material.

11. The method of claim 1, wherein the waste plastic raw material includes a mixture containing polyethylene (PE) or polypropylene (PP).

12. The method of claim 1, wherein the waste plastic raw material is subjected to a pretreatment process including crushing, washing, drying, and melting, prior to being supplied to the pyrolysis reactor.
